# FASCICULE DE BREVET EUROPEEN

(11) **EP 3 897 127 B1**
(45) Date de publication et mention de la délivrance du brevet: **12.06.2024**
(21) Numéro de dépôt: 19842802.1
(22) Date de dépôt: 10.12.2019
(51) Int. Cl.: A01M 21/04, F16M 13/04

(54) **HARNAIS ET SYSTÈME DE HARNAIS INDIVIDUEL POUR UN SYSTÈME DE DÉSHERBAGE THERMIQUE**
GURT UND EINZELGURTSYSTEM FÜR DIE THERMISCHE UNKRAUTBEKÄMPFUNG
HARNESS AND INDIVIDUAL HARNESS SYSTEM FOR THERMAL WEED CONTROL

(30) Priorité: 19.12.2018 FR 1873421
(43) Date de publication de la demande: 27.10.2021
(73) Titulaire: SEFMAT, 33185 Le Haillan (FR)
(72) Inventeur: MARIGOT, Julien, 33200 Bordeaux (FR); RENAUD, Christian, 33160 Saint Médard en Jalles (FR)
(74) Mandataire: LLR
(86) Numéro de dépôt international: PCT/FR2019/052988
(87) Numéro de publication internationale: WO 2020/128221

(56) Documents cités:
- WO-A1-2010/140939
- WO-A2-2004/070269
- FR-A1- 2 906 685
- US-A1- 2006 179 806

## Description

La présente invention se rapporte au domaine des systèmes individuels de désherbage thermique utilisant une lance thermique alimentée par une réserve de gaz, par exemple une bouteille de gaz de petit format, par exemple contenant cinq ou six litres de gaz; de telles bouteilles sont notamment commercialisées sous la marque Twiny par la société Primagaz et sous la marque Cube par la société Butagaz.

Il existe des modèles de harnais qui permettent à un utilisateur l'usage d'un taille-haies, en réduisant l'effort nécessaire à la manutention de cet outil. Ces harnais comprennent un bras, supportant le taille-haies, venant de l'arrière du harnais ; ce bras est souvent appelé « trompe d'éléphant ». Un tel bras réduit la qualité des mouvements latéraux et ne permet pas le travail au sol.

D'autres modèles de harnais, utilisés avec des débrousailleuses ou des coupe bordure à fit rotatif, contraignent à un mouvement du bassin et réduisent aussi la capacité à couvrir une grande étendue par balayage.

Le document WO2004/070269 enseigne un harnais pour un utilisateur d'un système de désherbage thermique, incluant une bouteille de gaz et une lance, qui comprend, dans le dos, un support pour la bouteille des bretelles et une ceinture. Ce harnais reste insatisfaisant.

Le problème à résoudre consiste à proposer un harnais de support d'un système individuel de désherbage thermique permettant une grande liberté de mouvement à l'utilisateur.

Pour résoudre ce problème l'invention propose un système de harnais pour un utilisateur d'un système de désherbage thermique, ce système incluant une bouteille de gaz et une lance thermique alimentée par cette bouteille, le harnais comprenant au moins :
- dans le dos, un support pour la bouteille ;
- une bretelle ;
- une ceinture ventrale ;
- au moins sur la bretelle, des moyens de fixation pour un montant d'une potence ;
- une potence dont un montant est prévu pour se fixer aux moyens de fixation du harnais et dont une traverse s'étend depuis le montant ; et,
- une suspente comprenant une première extrémité attachée à une partie supérieure du harnais, de préférence à une partie supérieure de la bretelle, et une deuxième extrémité prévue pour être fixée à la lance,
la potence comprenant une extrémité libre formant un oeillet et la suspente étant prévue pour passer au travers de cet oeillet.

Les moyens de fixation peuvent comprendre au moins un passant pour recevoir et articuler un montant d'une potence autour d'un axe de potence.

Les moyens de fixation peuvent comprendre au moins un passant et au moins un gousset, sensiblement alignés entre eux dans une position d'usage du harnais, le gousset étant de préférence fixé à la ceinture.

Plusieurs modes d'exécution de l'invention seront décrits ci-après, à titre d'exemples non limitatifs, en référence aux dessins annexés dans lesquels :
[Fig.1] est une vue schématique, en élévation et de profil d'un système de harnais selon l'invention ;
[Fig.2] est une vue partielle de trois-quarts avant du harnais de la figure 1 ; et,
[Fig.3] est une vue d'un utilisateur utilisant le système de harnais qui diffère de celui de la figure 1 par la forme de la potence.

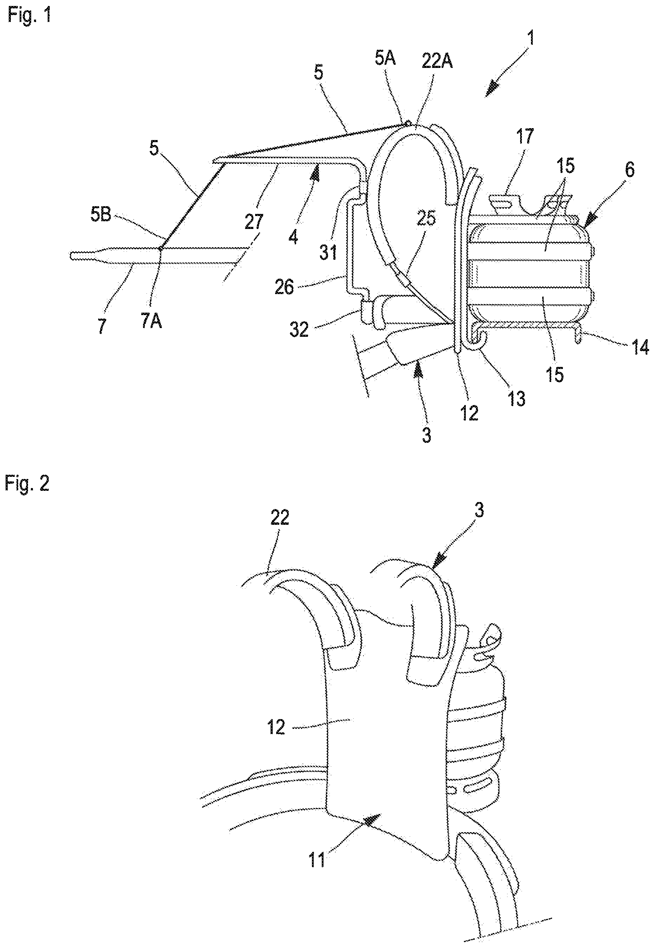

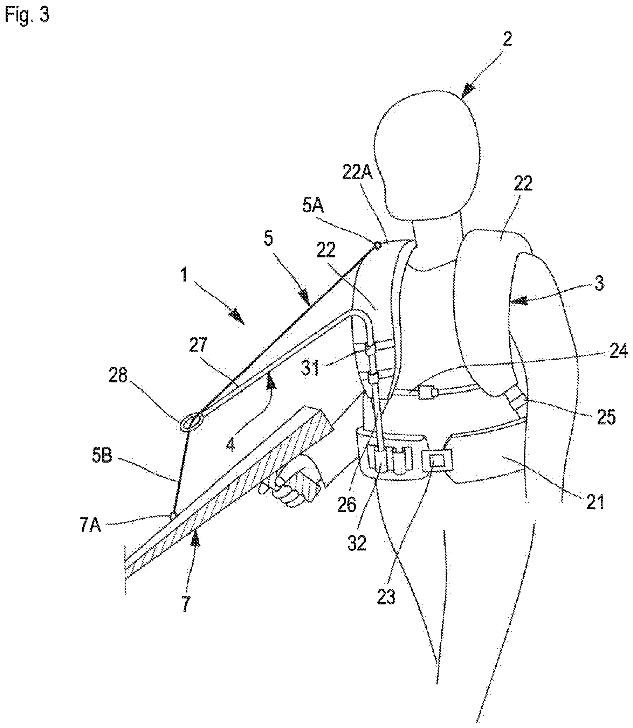

Dans la description, les termes « vertical » et « horizontal » se rapportent à une position théorique du système, tel que représenté à la figure 1. Les termes « gauche», « droite » et « dos » sont relatifs à l'utilisateur dans la position d'usage illustrée par la figure 3.

La figure 1 illustre un système 1 de harnais pour le désherbage thermique. Le système 1 est prévu pour être porté par un utilisateur 2, tel qu'illustré à la figure 2.

Le système 1 comprend un harnais 3, une potence 4 et une suspente 5. Iles prévu pour être utilisé en combinaison avec une bouteille de gaz 6 et une lance thermique 7. La lance 7 est alimentée en gaz à partir de la bouteille 6, à l'aide de moyen d'alimentation. Ces moyens d'alimentation ne sont pas représentés aux figures, afin d'en alléger le dessin.

Le harnais 3 comprend une structure sensiblement rigide 11. Dans l'exemple illustré, la structure 11 comprend une plaque dorsale 12 et des moyens de crochet 13. La plaque dorsale est prévue pour venir en appui contre le dos de l'utilisateur. La plaque dorsale est en un matériau sensiblement rigide, de préférence en métal. Les moyens de crochet sont fixés à la plaque dorsale; ils sont prévus pour venir en prise avec une base annulaire 14 de la bouteille 6. Le harnais comprend en outre des sangles 15 s'étendant depuis la structure 11 pour enserrer un réservoir 16 et un col 17 de la bouteille 6.

Le harnais comprend en outre une ceinture 21 et deux bretelles 22. La ceinture est en deux parties fixées à la structure 11 et reliées entre elles de façon amovible par une boucle 23. Les bretelles 22 sont maintenues entre elles par une sangle thoracique 24. Chaque ceinture comprend en outre des moyens d'encliquetage 25 rapide permet à l'utilisateur de se libérer de la bretelle et donc de retirer le sac plus facilement, notamment lorsqu'il il est chargé.

La potence 4 est réalisée en une seule pièce, d'une tige métallique coudée. Ainsi, la potence comprend un montant 26 et une traverse 27 s'étendant sensiblement perpendiculairement au montant, depuis une extrémité supérieure de ce montant. Une extrémité libre de la traverse forme un oeillet 28.

Le harnais 3 illustré à la figure 1 comprend des moyens de fixation 31,32 pour la potence 4. Ces moyens sont prévus pour maintenir le montant 26 sensiblement vertical. En outre, ils forment avantageusement une liaison pivot avec ce montant. Dans l'exemple illustré, les moyens de pivot sont formés d'un passant 31 et d'un gousset 32, sensiblement alignés entre eux. Le gousset est une poche dont un fond forme une butée limitant tout déplacement de la potence vers le bas. Le passant est cousu sur la bretelle droite. Le gousset est cousu sur la partie droite de la ceinture 21.

Le montant de la potence de la figure 1 a une forme de chicane, c'est-à-dire que l'extrémité supérieure du montant 26 est alignée avec son extrémité inférieure, mais d'une partie intermédiaire de ce montant est décalé latéralement par rapport aux extrémités. Cette forme du montant est telle que lorsque la potence est convenablement introduite dans les moyens de fixation 21, 32, elle y est maintenue de façon qu'elle ne puisse en sortir en cours d'opération.

Dans le mode de réalisation de la figure 3, le harnais comprend deux passants 31 verticalement alignés entre eux, tous deux cousus sur la même bretelle. La ceinture 21 comprend un deuxième gousset, décalé latéralement relativement au premier gousset et au voisinage de ce premier gousset. Ainsi, l'un ou l'autre des goussets peut être utilisé en fonction du serrage de la ceinture. Dans ce deuxième mode de réalisation, le montant 26 est rectiligne.

La suspente 5 comprend une première extrémité 5A attachée au harnais 3, au voisinage de l'épaule de l'utilisateur. Dans l'exemple illustré, elle est attachée à une partie supérieure 22A de la bretelle droite 22, prévue pour être disposée sur l'épaule droite de l'utilisateur 2.

La suspente comprend une deuxième extrémité 5B, prévue pour être fixée, de façon amovible, à un point de fixation 7A de la lance 7. Dans la position d'usage illustrée aux figures 1 et 3, la suspente 5 passe au travers de l'oeillet 28.

La suspente est de préférence élastique, de sorte qu'elle permet de rehausser ou de baisser le point de fixation 7A, relativement à l'oeillet 28, de sorte que la lance puisse être aisément dirigée vers une zone à désherber, en même temps que la suspente exerce sur la lance une force de bas en haut adapté à soulager l'utilisateur de tout ou partie du poids de cette lance.

La potence fournit un déport vers l'avant qui évite que la suspente ne tende à ramener la lance vers l'arrière, gênant les mouvements de l'utilisateur. L'oeillet étant sensiblement à l'aplomb du centre de gravité de la lance, la suspente fournit donc un effort essentiellement vertical, compensant, au moins partiellement le poids de la lance. La composante horizontale des efforts est reprise par la potence, et transmise au torse de l'utilisateur, sans qu'il n'en ressente aucune gêne notable.

Bien sûr, l'invention n'est pas limitée aux exemples qui viennent d'être décrits. Au contraire, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

Ainsi, dans l'exemple illustré, les moyens de fixation de la potence sont disposés à droite, sur le harnais ; un tel harnais est donc plus particulièrement adapté à un usage par un droitier. Le harnais peut n'en comprendre qu'à gauche, de sorte qu'il est plus particulièrement adapté à un usage par un gaucher, ou, à la fois à droite et à gauche, de sorte qu'il peut être utilisé indifféremment par un gaucher ou un droitier.

Le pivot formé par la potence et les moyens de pivot du harnais facilitent un balayage à 180 degrés d'une zone à désherber.

Le harnais peut avantageusement comprendre un sac gonflable disposé au niveau du creux des reins. Par pression sur une poire de gonflage, le coussin permet au harnais d'épouser la cambrure de l'utilisateur.

Le harnais peut aussi comprendre des réglages de la longueur de chaque bretelle. Il peut aussi comprendre au moins deux positions pour accrocher chaque bretelle à la structure du harnais, de sorte que l'on peut régler un écartement entre les bretelles.

## Revendications

1. Système de harnais (1) pour un utilisateur (2) d'un système de désherbage thermique, ledit système incluant une bouteille de gaz (6) et une lance thermique (7) alimentée par ladite bouteille, qui comprend :
- un harnais (3) comprenant :
- dans le dos, un support (11) pour ladite bouteille ;
- une bretelle (22) ; et,
- une ceinture (21) ;
**caractérisé en ce qu'**il comprend en outre :
- au moins sur ladite bretelle, des moyens de fixation (31,32) pour un montant (26) d'une potence (4) ;
- une potence (4) dont un montant (26) est prévu pour se fixer auxdits moyens de fixation (31,32) du harnais (3) et dont une traverse (27) s'étend depuis le montant ; et,
- une suspente (5) comprenant une première extrémité (5A) attachée à une partie supérieure du harnais, de préférence à une partie supérieure de la bretelle (22), et une deuxième extrémité (5B) prévue pour être fixée à ladite lance (7),
ladite potence comprenant une extrémité libre formant un oeillet (28), ladite suspente étant prévue pour passer au travers dudit oeillet (28).

2. Système de harnais selon la revendication 1, **caractérisé en ce que** les moyens de fixation comprennent au moins un passant (31) et au moins un gousset (32) sensiblement alignés entre eux dans une position d'usage du harnais, ledit gousset étant de préférence fixé à la ceinture (21).

3. Système de harnais selon l'une des revendications 1 et 2, **caractérisé en ce que** les moyens de fixation sont des moyens de pivot pour la potence (4).

## Patentansprüche

1. Gurtsystem (1) für einen Benutzer (2) eines Systems zur thermischen Unkrautbekämpfung, wobei das System eine Gasflasche (6) und ein von der Flasche versorgtes thermisches Strahlrohr (7) enthält, das Folgendes aufweist:
- einen Gurt (3) mit:
- eine Halterung (11) auf dem Rücken für die Flasche;
- einen Schulterriemen (22); und,
- einen Gürtel (21);
**dadurch gekennzeichnet, dass** es ferner aufweist:
- zumindest auf dem Schulterriemen Befestigungsmittel (31, 32) für einen Ständer (26) eines Auslegers (4);
- einen Ausleger (4), von der einen Ständer (26) zur Befestigung an den Befestigungsmitteln (31, 32) des Gurts (3) vorgesehen ist und von dem sich eine Querstrebe (27) von dem Ständer aus erstreckt; und,
- eine Leine (5) mit einem ersten Ende (5A), das an einem oberen Teil des Gurts, vorzugsweise an einem oberen Teil des Schulterriemens (22), befestigt ist, und einem zweiten Ende (5B), das zur Befestigung an dem Strahlrohr (7) vorgesehen ist, wobei der Ausleger ein freies Ende aufweist, das eine Öse (28) bildet, wobei die Leine dazu vorgesehen ist, durch die Öse (28) hindurchzugehen.

2. Gurtsystem nach Anspruch 1, **dadurch gekennzeichnet, dass** die Befestigungsmittel mindestens eine Schlaufe (31) und mindestens einen Zwickel (32) aufweisen, die in einer Gebrauchsposition des Gurts im Wesentlichen zueinander ausgerichtet sind, wobei der Zwickel vorzugsweise am Gürtel (21) befestigt ist.

3. Gurtsystem nach einem der Ansprüche 1 oder 2, **dadurch gekennzeichnet, dass** das Befestigungsmittel ein Schwenkmittel für den Ausleger (4) ist.

## Claims

1. Harness system (1) for a user (2) of a thermal weed control system, said system including a gas cylinder (6) and a thermal lance (7) supplied by said cylinder, which comprises:
- a harness (3) comprising:
- in the back, a support (11) for said cylinder;
- a shoulder strap (22); and,
- a belt (21);
**characterised in that** it further comprises:
- at least on said shoulder strap, means (31, 32) for attaching an upright (26) of an arm (4);
- an arm (4) having an upright (26) designed to be attached to said attachment means (31, 32) of the harness (3) and having a cross-member (27) extending from the upright; and,
- a suspension wire (5) comprising a first end (SA) attached to an upper part of the harness, preferably to an upper part of the shoulder strap (22), and a second end (5B) designed to be attached to said lance (7),
said arm comprising a free end forming an eyelet (28), said suspension wire being designed to go through said eyelet (28).

2. Harness system according to claim 1, **characterised in that** the attachment means comprise at least one loop (31) and at least one gusset (32) substantially aligned with each other in a position in which the harness is used, said gusset preferably being attached to the belt (21).

3. Harness system according to claim 1 or 2, **characterised in that** the attachment means are means allowing the arm (4) to pivot.
